# EUROPEAN PATENT SPECIFICATION

(11) **EP 2 399 079 B1**
(45) Date of publication and mention of the grant of the patent: **18.04.2018**
(21) Application number: 10705648.3
(22) Date of filing: 16.02.2010
(51) Int. Cl.: F24D 19/10, F24D 3/12, G05D 23/19

(54) **CONTROLLING UNDER SURFACE HEATING/COOLING**
STEUERUNG EINER BODENHEIZUNG / BODENKÜHLUNG
COMMANDE DE SYSTÈME DE CHAUFFAGE/REFROIDISSEMENT AU SOL

(30) Priority: 18.02.2009 FI 20095148
(43) Date of publication of application: 28.12.2011
(73) Proprietor: Uponor Innovation AB, 73061 Virsbo (SE)
(72) Inventor: JONSSON, Ulf, S-19492 Upplands Väsby (SE); VOGEL, Andreas, 23867 Sülfeld (DE)
(74) Representative: Papula Oy
(86) International application number: PCT/IB2010/050686
(87) International publication number: WO 2010/095092

(56) References cited:
- EP-A2- 0 192 228
- WO-A1-2008/025453
- DE-A1-102006 052 124
- DE-A1-102006 053 200

## Description

### Background of the invention

The invention relates to a method of controlling an under surface heating in which a room is heated using a supply loop in which liquid is circulated for heating the room, the method comprising increasing room temperature by increasing the flow of the liquid in the supply loop.

The invention further relates to a method of controlling an under surface cooling in which room is cooled using a supply loop in which liquid is circulated for cooling the room, the method comprising decreasing room temperature by increasing the flow of the liquid in the supply loop.

Yet further the invention relates to a hydronic heating/cooling system comprising a main supply pipe, a main return pipe, at least one supply manifold, at least one return manifold, heating loops from the supply manifold to the return manifold, actuators for controlling the flow in the heating loops arranged to the supply manifold and/or the return manifold and a control unit comprising means for controlling the actuators for controlling the flow of the liquid in the supply loop.

Yet further the invention relates to a software product of a control system of a hydronic heating system in which liquid is led along a main pipe to supply manifold and distributed in the manifold into heating loops, the heating loops returning to a return manifold, at least one of the manifolds having actuators for controlling the flow in the heating loops.

Yet further the invention relates to a software product of a control system of a hydronic cooling system in which liquid is led along a main pipe to a supply manifold and distributed in the manifold into heating loops, the heating loops returning to a return manifold, and at least one of the manifolds having actuators for controlling the flow in the heating loops.

Heating systems typically have different set temperatures over the day or week. The energy loss from a heated body is proportional to the ambient temperature difference. It is therefore possible to save energy by lowering the temperature of a room, for example, during the night when the room is not occupied. In a hydronic under surface heating system, when the temperature is raised back to comfort level, typically the flow of the supply loop is increased. An under floor heating system is quite a slow system. Thus, typically quite a long time, for example several hours, is needed to raise the temperature from the lower value to a comfort temperature. Further, the heat-up time depends on the energy loss of the room which for its part depends on outside temperature. Different gain curves depending on outside temperature could be used for compensating the outside temperature. However, this kind of compensation is extremely complicated for transitions between different temperatures.

The document JP 11 182865 discloses a solution in which water is heated by primary paths and floor is heated by secondary paths. Thermistors detect the heat on the primary and secondary paths and control water by control valves. The first thermistor is set to a target temperature during rapid heating operation. After reaching switching temperature, rapid heating is stopped and the second thermistor is set to a second target temperature. The document JP 57077837 discloses a control system of floor heating. The feeding amount of a fuel to a boiler at the time of initiation of heating is increased. The document JP 57062330 discloses a control system for floor heater. At the start of heating, in order to accelerate the rise of heating, the boiler is operated at a large input and the maximum hot water temperature so as to raise the surface temperature of the heater. Document WO 2008025453 discloses a method for operating a network of pipes. Document DE 102006052124 discloses an equalization system for a floor temperature control arrangement.

### Brief description of the invention

The object of the invention is to provide a new method and arrangement for controlling under surface heating/cooling.

The method of the invention relating to the under surface heating is characterized by, in response to a set-point change greater than a pre-determined value, increasing temporarily the supply temperature of the liquid.

Further, the method of the invention relating to the under surface cooling is characterized by, in response to a set-point change greater than a pre-determined value, decreasing temporarily the supply temperature of the liquid.

The system of the invention is characterized in that the control unit comprises means for temporarily increasing the supply temperature of the liquid in heating mode and means for temporarily decreasing the supply temperature of the liquid in cooling mode in response to a set-point change greater than a pre-determined value.

The software product of the invention relating to the under surface heating is characterized in that the execution of the software product on a control unit of the control system is arranged to provide the following operations of increasing room temperature by increasing the flow of the liquid in the supply loop and, in response to a set-point change greater than a pre-determined value increasing temporarily the supply temperature of the liquid.

Further, the software product of the invention relating to the under surface cooling is characterized in that the execution of the software product on a control unit of the control system is arranged to provide the following operations of decreasing room temperature by increasing the flow of the liquid in the supply loop and in response to a set-point change greater than a pre-determined value decreasing temporarily the supply temperature of the liquid.

In the invention, during a heating mode, room temperature is increased by increasing the flow of the liquid in a supply loop. If the set point has an increase that is greater than a pre-determined value, the supply temperature of the liquid is increased. Thus, a boost mode is activated for raising the temperature. This provides the advantage that the step response of the room temperature is faster, i.e., the room temperature is raised faster. By reducing the heat-up time, energy is saved, because the average room temperature could be decreased by fast transitions when increasing the temperature. The solution also provides improved comfort.

In an embodiment, the zones with the latest set-point changes are prioritized by the controller for a period of time or until the set points are reached. This further speeds up the raising of the temperature in these zones whereby the heating of the other parts is not essentially disturbed.

In another embodiment, cold liquid is supplied to the loop in the last stage before reaching the new set point. This feature reduces or minimizes the overshoot and the heating ramp can also be steep close to the set point. Thus, the heating time can be reduced and overshoot minimized.

In a yet another embodiment, previous transitions and outside temperatures are analyzed and the transition ramps are optimized on the basis of the analysis. This feature further increases the speed of the transition and reduces overshoot.

### Brief description of the figures

Some embodiments of the invention are described in greater detail in the attached drawing in which
Figure 1 is a schematic of a hydronic heating/cooling system.
Figure 2 shows schematically the temperature of a room, and
Figure 3 shows schematically the temperature of supply liquid.

### Detailed description of the invention

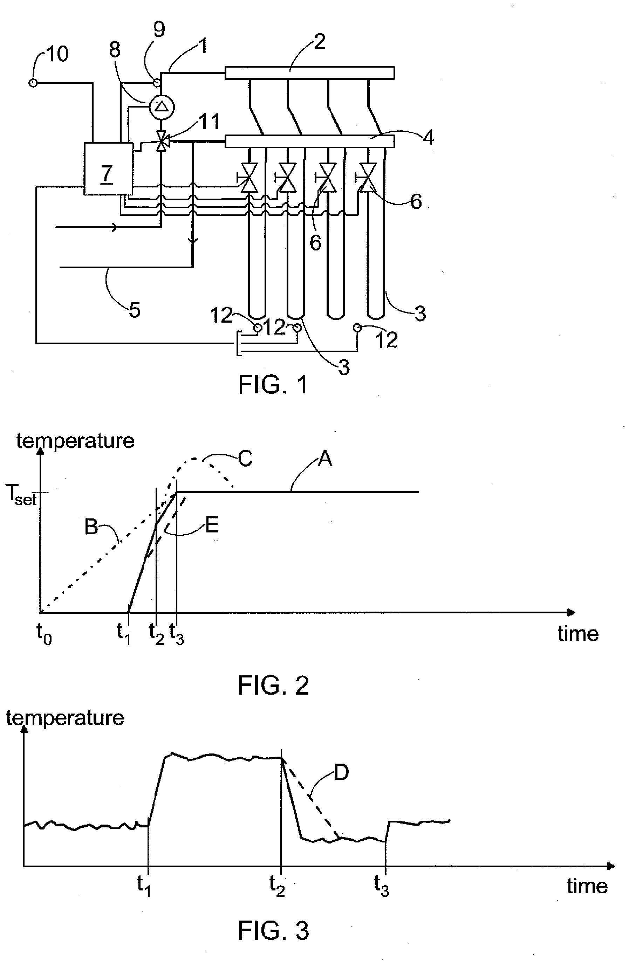

Figure 1 shows a hydronic heating/cooling system. In the system, liquid is led along a main supply pipe 1 to a supply manifold 2. The supply manifold 2 distributes the liquid to several heating loops 3. The heating loops 3 make the liquid to flow through the rooms or spaces to be heated or cooled. If the system is used for heating, the liquid can be warm water, for example. On the other hand, if the system is used for cooling the liquid flowing in the pipes is cool liquid that cools the rooms or spaces.

The pipes forming the heating loops 3 return to a return manifold 4. From the return manifold 4, the liquid flows back again along a main return pipe 5.

Actuators 6 are arranged to the return manifold 4. The actuators 6 control the flow of the liquid in the loops 3.

A control unit 7 controls the operation of the actuators 6. The actuators 6 can also be arranged to the supply manifold 2. Further, there can be actuators both in the supply manifold 2 and in the return manifold 4. Either one of the manifolds 2 and 4 can further comprise balancing valves. The balancing valves can be manually operated, for example.

The system can also comprise a circulation pump 8 and a connection between the main supply pipe 1 and the main return pipe, the connection being provided with a mixing valve 11. A separate circulation pump 8 and/or a connection between the pipes 1 and 5 is, however, not always necessary.

The control unit 7 measures the temperature of the liquid by a temperature sensor 9. The outside temperature is also measured by a temperature sensor 10. The control unit 7 can control the temperature of the liquid in the main flow pipe 1, i.e., the supply temperature of the liquid, on the basis of the outside temperature, for example. The control unit 7 can control the temperature of the liquid in the main flow pipe 1 by controlling the mixing valve 11, for example.

The control unit 7 can comprise a zone controller part that controls the actuators 6 and the circulation pump and a primary controller part which controls the mixing valve 11, for example. In such a case, the zone controller part and the primary controller part are connected by a bus, for example.

The room thermostats 12 are positioned in the rooms to be heated. The temperature in the rooms is measured by the thermostats and the information is led to the control unit 7. The user can also adjust the set point of the temperature by the thermostats 12. The set points can also be adjusted by another adjuster or by a programmed pattern.

A hydronic under floor heating system distributes the needed heating to each room in the building by controlling the hot water flow through a heating loop or supply loop in the floor. Normally, one loop per room is used but sometimes a large room is split into two or more loops. A controller will act on the information from the room thermostat and accordingly turn the water flow on or off in the floor loop.

The floor loop or heating loop piping is typically made of crosslinked polyethylene plastic pipes, for example. These pipes can be used in different types of floor constructions, i.e., both concrete and wooden floors can be heated this way. It is essential that the insulation, under the pipes, in the floor construction is good to avoid the leakage of energy out downwards. The floor loop layout depends on the heat demand for each room.

In a concrete floor, typically 20-mm pipes are used, the pipes being usually attached to a re-enforcing net before the final concrete casting. The recommendation is that the top of the pipes should be 30 to 90 mm below the concrete surface and the pipe loops should be placed at a 300-mm center distance. Concrete conducts heat well, so this layout will lead to an even distribution of energy and give an even temperature on the floor surface. This building method using concrete and 20-mm pipes is an economical way of building a UFH (underfloor heating) system.

Due to the good thermal conduction in concrete, the loop can be fed with low supply temperature, normally below 35 degrees Celsius.

The step response is quite slow due to the large mass of the floor, normally between 8 to 16 h depending on the floor thickness.

In wooden floors there are some different construction techniques available and we can divide them into two main categories: floor loops inside the floor construction or on top of the floor construction. It is to be noted that all UFH wood construction techniques use aluminum plates to distribute the heat from the pipes. This compensates for the poor heat conduction in wood. Generally speaking, all "in floor" constructions use 20-mm pipes and the "on floor" technique uses 17-mm pipes that are mounted in pre-grooved floorboards. However, it is self-evident to a person skilled in the art that the diameter of the pipes can also be different and it is determined according to the need and/or requirements set by the system and/or environment.

Due to the poor thermal conduction in a wooden floor, the loops need a higher supply temperature than a concrete floor, normally up to 40 degrees Celsius.

The step response is quicker than for concrete, normally between 4 to 6 h depending on the floor construction.

The previously mentioned systems are primarily installed when a house is built. In addition to these, there are UFH systems for after installation. This system focuses on a low building height and the ease of handling, and uses smaller pipe diameters, and the pipes are mounted in pre-grooved polystyrene floor panels. The supply temperature and step response are quite similar to those of wooden constructions.

The stroke cycle of the actuator is preferably less than 120 seconds. The actuator can be a conventional mechanical piston valve. The actuator can also be, for example, a solenoid valve. When using a solenoid valve, the stroke time of the actuator can be very short. Thus, the stroke time or operating time of the actuator can be for example in the range of 0.1 to 120 seconds. Preferably actuators with fast operating time are used. Thus, the operating time of the actuators is preferably less than 10 seconds.

In the control system, the term "pulse width" refers to the on time of the flow, i.e., the duty cycle. A minimum pulse width is preferred in order to achieve efficient heating. However, the minimum pulse width is preferably determined such that during the duty cycle the longest loop is also filled with supply water. The minimum pulse width means that the time frame of the control is quite short, which means high frequency. Preferably, the time frame is shorter than 1/3 of the response time of the floor in the room to be heated. The time frame may vary for example between 5 and 60 minutes. In order to achieve the feature that the duty cycles start at different moments in different loops, the length of the off-times between the duty cycles can be varied using a pattern or randomly. The variation must naturally be carried out within certain limits, such that the percentage of the duty cycles can be kept at a desired value. Another option is to vary the pulse width using a pattern or randomly in a corresponding manner. Yet another option is to use different time frames in different loops. For example, in one loop the time frame can be 29 minutes, in a second loop the time frame can be 30 minutes, and in third loop the time frame can be 31 minutes. Of course sometimes the duty cycles start simultaneously in different loops, but using at least one of the above-mentioned systems, the duty cycles start at different moments in most cases. Thus, the object is to prevent the duty cycles in different loops from running synchronously.

The percentage of the duty cycle means how long the on-state of the time frame is. In other words, if the time frame is 10 minutes and the percentage of the duty cycle is 10 %, it means that the flow is on for 1 minute and off for 9 minutes, if the percentage is 50 the flow is on for 5 minutes and off for 5 minutes and if the percentage of the duty cycle is 90, the flow is on for 9 minutes and off for 1 minute off. If the time frame is short enough, control can be considered continuous if the system is slow enough, i.e., the response time of the floor is long.

This specification refers to hydronic under surface heating/cooling. In such a system, liquid is supplied to supply loops for cooling/heating. The liquid can be for example water or any other suitable liquid medium. The liquid may comprise glycol, for example. Under surface heating/cooling means that the supply loops are installed under the floor, for example. The supply loops can also be installed in any other suitable structure. The loops may be installed in the wall or ceiling, for example.

In an embodiment an on/off control is combined with pulse width modulation per room. The pulse width depends on the response in the room. At the startup the pulse width is preferably always 50%. The time frame for the pulse width can be 30 minutes, for example. It is important to prevent the different channels/loops from running synchronously. Adding a random value of -30 to +30 seconds to the time frame can prevent this. Another possibility is to have a slightly different time frame for each channel/loop. It is enough if the difference is 5 seconds, for example.

The maximum value for the pulse width is 25 minutes and the minimum value is 5 minutes. The resolution can be 1 minute, for example. Preferably, the pulse width modulation counter is reset the by a change of a set point which prevents delays in the system.

A heating cycle is defined as the time between one heating request and the next heating request.

Maximum and minimum room temperatures are monitored and saved during a full heating cycle.

The pulse width is adjusted at timeout, at heat-up modes or after a heating cycle.

The master timeout for pulse width adjustment can be for example 300 minutes.

The control system comprises an appropriate means for performing the desired functions. For example, a channel block calculates the control signal based on the set point, the room temperature and the energy required. The energy is pulse width modulated and the energy requirement is calculated by measuring the characteristics of the room temperature over time.

One way to describe this is that it is a traditional on/off control with self-adjusting gain.

In an embodiment, the pulse width modulation output can be adjusted between 15 to 70% of the duty cycle. The start value is 50%. The maximum and minimum values during an on/off cycle are stored and evaluated and the duty cycle is adjusted if needed.

The pulse width modulation timer is restarted if the set point increases more than 1 degree.

The curve A in Figure 2 shows how the temperature in one room changes if the procedure described below is used during a heating mode. The new set point Tₛₑₜ is larger than a pre-determined value. The request to raise the temperature can come from a room thermostat 12 adjusted by the end-user, for example. The set-point change can be larger than 3 degrees, for example. This activates the boost mode, which means that the supply temperature of the liquid is increased. For example, it is beforehand determined that the new set point must be reached at six o'clock in the morning. The moment when the set point must be reached is shown in Figure 2 with reference sign t₃. In a conventional system the rising of the temperature would follow curve B, which is shown with a dash and dot line. Thus, in a conventional system the rising of the temperature takes quite a long time from the moment t₀ to the moment t₃.

Now, however, the supply temperature of the liquid is increased and it is possible to start the heating period at the moment t₁. Thus, the rising of the temperature in the room happens rather fast.

However, the rise of the ramp is steep, which means that an overshoot, which is denoted with a dash and dot line C in Figure 2, easily occurs. This overshoot can be reduced or minimized by lowering the supply temperature before the set point is reached.

Figure 3 illustrates the supply temperature of the liquid during a heating mode. The ripple in the curve illustrates that the control unit 7 adjusts the supply temperature on the basis of the outside temperature. At the moment t₁ the supply temperature is increased by adjusting the mixing valve 11, for example. At the moment t₂ the supply temperature is lowered. Thus, after the moment t₂ cooler supply liquid is supplied. The room is not cooled but it is heated less between the moments t₂, and t₃ than between the moments t₁ and t₂. If only the mixing valve 11 is controlled, the supply temperature lowers according to the curve shown by the broken line D. Thus, the supply temperature lowers quite slowly. This means that the room temperature would act according to the line E in Figure 2.

However, if the supply temperature is lowered faster than shown by the curve in Figure 3 with a solid line, it is possible to start lowering the temperature at the moment t₂. The supply temperature of the liquid can be cooled by opening temporarily at least some of the actuators 6 of the other loops 3, which are not boosted. If there have been no heat calls in these loops, these loops contain liquid having lower temperature than the liquid in the boosted loop. These loops need to be opened only for a short time. If this time is less than 10 minutes, for example, this does not substantially raise the temperature in the rooms through which these loops pass.

The supply temperature between the moments t₂ and t₃ can be lower than the normal supply temperature before boosting. At the moment t₃ the supply temperature can be raised to a normal level.

During a cooling mode a corresponding procedure is used. It is, however, self-evident that then room temperature is decreased by increasing the flow of liquid in the supply loop and, in response to a set-point change greater than a pre-determined value, decreasing temporarily the supply temperature of the liquid. The overshoot is reduced by supplying warmer liquid to the loop before reaching the set point.

The control unit 7 can comprise a software product whose execution on the control unit 7 is arranged to provide at least some of the above-described operations. The software product can be loaded onto the control unit 7 from a storage or memory medium, such as memory stick, a memory disc, a hard disc, a network server, or the like, the execution of which software product in the processor of the control unit or the like produces operations described in this specification for controlling a hydronic heating/cooling system.

In some cases the features described in this application can be used as such regardless of other features. The features described in this application may also be combined as necessary to form various combinations.

The drawings and the related description are only intended to illustrate the idea of the invention. The invention may vary in detail within the scope of the claims.

## Claims

1. A method of controlling an under surface heating in which a room is heated using a supply loop (3) in which liquid is circulated for heating the room, the method comprising
increasing room temperature by increasing the flow of the liquid in the supply loop (3),
**characterized by**, in response to a set-point change greater than a pre-determined value, a boost mode is activated for raising the temperature by increasing for a time period beforehand determined the supply temperature of the liquid.

2. A method according to claim 1, **characterized by** heating a plurality of zones and prioritizing by a controller zones with latest set-point changes for a period of time or until the set points are reached.

3. A method according to claim 1 or 2, **characterized by** supplying cooler liquid to the loop (3) before reaching the set point for reducing overshoot.

4. A method according to claim 3, **characterized in that** a plurality of loops (3) are used for heating and the cooler liquid is obtained by opening temporarily at least some of the actuators (6) of the loops (3) which are not boosted.

5. A method according to any one of the preceding claims, **characterized by** analyzing previous transitions and outside temperatures and optimizing transition ramps on the basis of the analysis.

6. A method according to any one of the preceding claims, **characterized by** controlling the flow of the liquid on and off such that during a duty cycle the flow is high and between the duty cycles the flow is off, whereby room temperature is controlled by controlling the percentage of the duty cycles.

7. A method of controlling an under surface cooling in which a room is cooled using a supply loop (3) in which liquid is circulated for cooling the room, the method comprising
decreasing room temperature by increasing the flow of the liquid in the supply loop (3), **characterized by**
in response to a set-point change greater than a pre-determined value, a boost mode is activated for cooling the temperature by decreasing for a time period beforehand determined the supply temperature of the liquid.

8. A method according to claim 7, **characterized by**
supplying warmer liquid to the loop (3) before reaching the set point for reducing overshoot.

9. A hydronic heating/cooling system comprising a main supply pipe (1), a main return pipe (5), at least one supply manifold (2), at least one return manifold (4), supply loops (3) from the at least one supply manifold (2) to the at least one return manifold (4), actuators (6) for controlling the flow in the supply loops (3) arranged to the supply manifold (2) and/or the return manifold (4) and a control unit (7) comprising means for controlling the actuators (6) for controlling the flow of the liquid in the supply loop (3), **characterized in that**
the control unit (7) comprises means for for a time period beforehand determined increasing the supply temperature of the liquid in heating mode and means for for a time period beforehand determined decreasing the supply temperature of the liquid in cooling mode in response to a set-point change greater than a pre-determined value, wherein a boost mode is activated.

10. A system according to claim 9, **characterized in that**
the control unit (7) comprises means for controlling cooler liquid to be supplied to the loop (3) before reaching the set point in heating mode and/or for controlling warmer liquid to be supplied to the loop (3) before reaching set point in cooling mode for reducing overshoot.

11. A system according claim 9 or 10, **characterized in that** the actuators (6) are arranged to control the flow in the supply loops (3) on and off such that during the duty cycle the flow is high and between the duty cycles the flow is off.

12. A software product comprising instructions to cause the hydronic heating system of claim 9 to execute the method of claim 1 when the software product is loaded onto a control unit (7) and executed in a processor of the control unit (7).

13. A software product comprising instructions to cause the hydronic cooling system of claim 9 to execute the method of claim 7 when the software product is loaded onto a control unit (7) and executed in a processor of the control unit (7).

## Patentansprüche

1. Verfahren zum Steuern einer Fußbodenheizung, bei der ein Raum unter Verwendung einer Versorgungsschleife (3) beheizt wird, in der eine Flüssigkeit zum Heizen des Raums umgewälzt wird, wobei das Verfahren umfasst:
Erhöhen der Raumtemperatur durch Erhöhen des Durchflusses der Flüssigkeit in der Versorgungsschleife,
**gekennzeichnet dadurch, dass** im Ansprechen auf eine Sollwertveränderung, die größer ist als ein vorbestimmter Wert, ein Boost-Modus aktiviert wird, um die Temperatur durch Erhöhen der Vorlauftemperatur der Flüssigkeit für einen zuvor bestimmten Zeitraum zu erhöhen.

2. Verfahren nach Anspruch 1, **gekennzeichnet durch** Aufheizen einer Mehrzahl von Zonen und Zuordnen von Prioritäten, und zwar durch eine Steuereinheit, zu Zonen mit den letzten Sollwertveränderungen für einen Zeitraum oder bis die Sollwerte erreicht sind.

3. Verfahren nach Anspruch 1 oder 2, **gekennzeichnet durch** Zuleiten von kühlerer Flüssigkeit in die Schleife (3) vor dem Erreichen des Sollwerts, um eine Überschreitung abzusenken.

4. Verfahren nach Anspruch 3, **dadurch gekennzeichnet, dass** eine Vielzahl von Schleifen (3) zum Heizen verwendet werden und die kühlere Flüssigkeit dadurch erhalten wird, indem zumindest einige der Stellglieder (6) anderer Schleifen (3), die nicht im Boost-Modus sind, temporär geöffnet werden.

5. Verfahren nach einem der vorhergehenden Ansprüche, **gekennzeichnet durch** Analysieren vorhergehender Übergänge und Außentemperaturen, und Optimieren von Übergangsanstiegen/-abfällen auf Grundlage der Analyse.

6. Verfahren nach einem der vorhergehenden Ansprüche, **gekennzeichnet durch** Steuern des Ein-/Ausschaltens des Durchflusses der Flüssigkeit so, dass während eines Einschaltzyklus der Durchfluss hoch ist und zwischen den Einschaltzyklen der Durchfluss ausgeschaltet ist, wodurch die Raumtemperatur durch Steuern des Prozentanteils der Einschaltzyklen gesteuert/geregelt wird.

7. Verfahren zum Steuern einer Fußbodenkühlung, bei der ein Raum unter Verwendung einer Versorgungsschleife (3) gekühlt wird, in der eine Flüssigkeit zum Kühlen des Raums umgewälzt wird, wobei das Verfahren umfasst:
Senken der Raumtemperatur durch Erhöhen des Durchflusses der Flüssigkeit in der Versorgungsschleife (3), **gekennzeichnet dadurch dass**
als Reaktion auf eine Sollwertänderung, die größer als ein vorgegebener Wert ist, ein Boost-Modus zur Kühlung der Temperatur aktiviert wird, indem die Vorlauftemperatur der Flüssigkeit für einen zuvor festgelegten Zeitraum abgesenkt wird.

8. Verfahren nach Anspruch 7, **gekennzeichnet durch** Zuleiten von wärmerer Flüssigkeit in die Schleife (3) vor dem Erreichen des Sollwerts, um eine Überschreitung abzusenken.

9. Hydronisches Heiz-/Kühlsystem, ein Hauptzuleitungsrohr (1), ein Hauptrücklaufrohr (5), mindestens einen Versorgungsverteiler (2), mindestens einen Rücklaufverteiler (4), Heizschleifen (3) vom Versorgungsverteiler (2) zum Rücklaufverteiler (4), und Stellglieder (6) zum Steuern des Durchflusses in den Heizschleifen (3), die dem Versorgungsverteiler (2) und/oder dem Rücklaufverteiler (4) zugeordnet sind, und eine Steuereinheit (7) umfassend, die Einrichtungen zum Steuern der Stellglieder (6) zum Steuern des Durchflusses der Flüssigkeit in der Versorgungsschleife (3) umfasst, **dadurch gekennzeichnet, dass**
die Steuereinheit (7) Einrichtungen umfasst, um im Ansprechen auf eine Sollwertveränderung, die größer ist als ein vorbestimmter Wert, die Vorlauftemperatur der Flüssigkeit in der Heizbetriebsart für einen zuvor festgelegten Zeitraum zu erhöhen und Einrichtungen umfasst, um im Ansprechen auf eine Sollwertveränderung, die größer ist als ein vorbestimmter Wert, die Vorlauftemperatur der Flüssigkeit in der Kühlbetriebsart für einen zuvor festgelegten Zeitraum zu senken, wobei ein Boost-Modus aktiviert wird.

10. System nach Anspruch 9, **dadurch gekennzeichnet, dass**
die Steuereinheit (7) Einrichtungen umfasst, um zu steuern, dass in der Heizbetriebsart vor dem Erreichen des Sollwerts kühlere Flüssigkeit in die Schleife zugeleitet wird und/oder in der Kühlbetriebsart vor dem Erreichen des Sollwerts wärmere Flüssigkeit in die Schleife zugeleitet wird, um eine Überschreitung abzusenken.

11. System nach Anspruch 9 oder 10, **dadurch gekennzeichnet, dass**
die Stellglieder (6) dazu eingerichtet sind, das Ein-/Ausschalten des Durchflusses der Flüssigkeit in den Heizschleifen (3) so zu steuern, dass während eines Einschaltzyklus der Durchfluss hoch ist und zwischen den Einschaltzyklen der Durchfluss ausgeschaltet ist.

12. Softwareprodukt, umfassend Anweisungen, um das hydronische Heizsystem nach Anspruch 9 dazu zu veranlassen, das Verfahren nach Anspruch 1 auszuführen, wenn das Softwareprodukt auf eine Steuereinheit (7) geladen und in einem Prozessor der Steuereinheit (7) ausgeführt wird.

13. Softwareprodukt, umfassend Anweisungen, um das hydronische Kühlsystem nach Anspruch 9 dazu zu veranlassen, das Verfahren nach Anspruch 7 auszuführen, wenn das Softwareprodukt auf eine Steuereinheit (7) geladen und in einem Prozessor der Steuereinheit (7) ausgeführt wird.

## Revendications

1. Procédé de commande d'un chauffage sous la surface, dans lequel une pièce est chauffée en utilisant une boucle d'alimentation (3), dans laquelle un liquide est mis en circulation pour chauffer la pièce, le procédé comprenant
l'augmentation de la température ambiante en augmentant le volume de liquide en circulation dans la boucle d'alimentation (3),
**caractérisé en ce que**, en réponse à une variation du point de consigne supérieure à une valeur prédéterminée, un mode d'amplification est activé pour augmenter la température en augmentant, pendant une période de temps déterminée au préalable, la température d'alimentation du liquide.

2. Procédé suivant la revendication 1, **caractérisé en ce que** plusieurs zones sont chauffées et la priorité est donnée, par un contrôleur, à des zones avec les variations de point de consigne les plus récentes pour une période de temps ou jusqu'à ce que les points de consigne soient atteints.

3. Procédé suivant la revendication 1 ou 2, **caractérisé en ce que** la boucle (3) est alimentée en liquide plus froid avant que le point de consigne soit atteint pour réduire un dépassement.

4. Procédé suivant la revendication 3, **caractérisé en ce que** plusieurs boucles (3) sont utilisées pour le chauffage et le liquide plus froid est obtenu en ouvrant temporairement au moins quelques-uns des actionneurs (6) des boucles (3) qui ne sont pas en mode d'amplification.

5. Procédé suivant une quelconque des revendications précédentes, **caractérisé en ce que** les transitions précédentes et les températures extérieures sont analysées et des rampes de transition sont optimisées sur la base de cette analyse.

6. Procédé suivant une quelconque des revendications précédentes, **caractérisé en ce que** l'alimentation et l'arrêt de l'écoulement du liquide sont commandés de telle sorte que, pendant un cycle de service, l'écoulement est élevé et, entre les cycles de service, l'écoulement est arrêté, ainsi, la température ambiante est commandée en commandant le pourcentage des cycles de service.

7. Procédé de commande d'un refroidissement sous la surface, dans lequel une pièce est refroidie en utilisant une boucle d'alimentation (3), dans laquelle un liquide est mis en circulation pour refroidir la pièce, le procédé comprenant
la diminution de la température ambiante en augmentant le volume de liquide en circulation dans la boucle d'alimentation (3), **caractérisé en ce que**
en réponse à une variation de point de consigne supérieure à une valeur prédéterminée, un mode d'amplification est activé pour refroidir la température en diminuant la température d'alimentation du liquide pendant une période de temps déterminée au préalable.

8. Procédé suivant la revendication 7, **caractérisé en ce que** la boucle (3) est alimentée en liquide plus chaud avant d'atteindre le point de consigne pour réduire un dépassement.

9. Système de chauffage/refroidissement hydronique comprenant un tuyau d'alimentation principal (1), un tuyau de retour principal (5), au moins un collecteur d'alimentation (2), au moins un collecteur de retour (4), des boucles d'alimentation (3) allant de l'au moins un collecteur d'alimentation (2) à l'au moins un collecteur de retour (4), des actionneurs (6) pour commander l'écoulement dans les boucles d'alimentation (3) prévus au collecteur d'alimentation (2) et/ou au collecteur de retour (4) et une unité de commande (7) comprenant des moyens de commande des actionneurs (6) pour commander l'écoulement du liquide dans la boucle d'alimentation (3), **caractérisé en ce que**
l'unité de commande (7) comprend des moyens pour, pendant une période de temps déterminée au préalable, augmenter la température d'alimentation du liquide en mode de chauffage et des moyens pour, pendant une période de temps prédéterminée au préalable, diminuer la température d'alimentation du liquide en mode de refroidissement, en réponse à une variation de point de consigne supérieure à une valeur prédéterminée, un mode d'amplification étant activé.

10. Système suivant la revendication 9, **caractérisé en ce que**
l'unité de commande (7) comprend des moyens pour commander l'alimentation de la boucle (3) en liquide plus froid avant d'atteindre le point de consigne en mode de chauffage et/ou pour commander l'alimentation de la boucle (3) en liquide plus chaud avant d'atteindre le point de consigne en mode de refroidissement pour réduire un dépassement.

11. Système suivant la revendication 9 ou 10, **caractérisé en ce que** les actionneurs (6) sont prévus pour commander l'alimentation et l'arrêt de l'écoulement dans les boucles d'alimentation (3) de telle sorte que, pendant le cycle de service, l'écoulement est élevé, et, entre les cycles de service, l'écoulement est arrêté.

12. Produit logiciel comprenant des instructions pour inciter le système de chauffage hydronique suivant la revendication 9 à exécuter le procédé suivant la revendication 1, lorsque le produit logiciel est chargé sur une unité de commande (7) et exécuté par un processeur de l'unité de commande (7).

13. Produit logiciel comprenant des instructions pour inciter le système de refroidissement hydronique suivant la revendication 9 à exécuter le procédé suivant la revendication 7, lorsque le produit logiciel est chargé sur une unité de commande (7) et exécuté dans un processeur de l'unité de commande (7).
